# FASCICULE DE BREVET EUROPEEN

(11) **EP 3 259 404 B1**
(45) Date de publication et mention de la délivrance du brevet: **05.12.2018**
(21) Numéro de dépôt: 16714960.8
(22) Date de dépôt: 16.02.2016
(51) Int. Cl.: E02B 17/02, B63B 35/44, E02D 27/52, E02B 17/00, F03D 13/20, B63B 35/00, F03D 13/10

(54) **STRUCTURE DE SUPPORT ET D'ANCRAGE D'ÉOLIENNE MARITIME DU TYPE EMBASE GRAVITAIRE ET PROCÉDÉ DE REMORQUAGE ET DÉPOSE EN MER**
SCHWERKRAFTBASIERTE STRUKTUR ZUR ABSTÜTZUNG UND VERANKERUNG EINER OFFSHORE-WINDTURBINE UND VERFAHREN ZUM SCHLEPPEN UND INSTALLIEREN DAVON IM MEER
GRAVITY-BASE-TYPE STRUCTURE FOR SUPPORTING AND ANCHORING AN OFFSHORE WIND TURBINE, AND METHOD FOR TOWING AND INSTALLING SAME IN THE SEA

(30) Priorité: 18.02.2015 FR 1551373
(43) Date de publication de la demande: 27.12.2017
(73) Titulaire: SAIPEM S.A., 78180 Montigny Le Bretonneux (FR)
(72) Inventeur: COLMARD, Christophe, 78280 Guyancourt (FR)
(74) Mandataire: Domange, Maxime
(86) Numéro de dépôt international: PCT/FR2016/050346
(87) Numéro de publication internationale: WO 2016/132059

(56) Documents cités:
- WO-A2-2009/154472
- GB-A- 2 454 585
- GB-A- 2 481 321

## Description

La présente invention est relative aux éoliennes installées au large des côtes, en mer. Plus particulièrement, le domaine technique de l'invention est celui de la fabrication, du transport et de l'installation de structure de support et d'ancrage d'éolienne de production d'énergie électrique, plus particulièrement d'éoliennes offshore de très grande capacité, destinées à être installées en mer, plus particulièrement au large des côtes et en grand nombre pour former des champs d'éoliennes.

Une éolienne marine comporte généralement un moteur à plusieurs pales et à axe horizontal, ainsi qu'un générateur électrique accouplé au moteur, qui sont fixés à l'extrémité supérieure d'un support allongé verticalement tel qu'un mât ou pylône supporté par une structure de support et d'ancrage au fond de la mer. Plus particulièrement, les éoliennes installées en mer sont en général assemblées sur site sur une structure de support et d'ancrage formant une embase reposant et/ou ancrée au fond, structure support dont l'extrémité supérieure comprend un dispositif supérieur, notamment une cavité tubulaire, apte à recevoir le pylône de l'éolienne, notamment une cavité munie d'une bride sur laquelle une contre-bride identique, solidaire du pylône de l'éolienne est boulonnée pour assurer l'encastrement de l'ensemble.

L'invention s'applique particulièrement, c'est-à-dire non limitativement, aux éoliennes comportant un générateur dont la puissance est située dans une plage allant de 100kW à 10 MW ; la masse d'un tel générateur peut atteindre ou dépasser 300 ou 500 tonnes ; la longueur d'un pylône supportant ce générateur peut être de l'ordre de 50 à 100 mètres, et la masse du pylône peut être située dans une plage allant de 100 à 500 tonnes.

Des éoliennes maritimes ont été décrites dans WO 01/34977 et WO 03/004870 par exemple. Elles sont montées à terre puis transportées par bateau sur leur site d'opération en mer au large des côtes.

La construction, le transport et l'installation de telles structures support d'éoliennes et leur installation en mer présentent de grandes difficultés. On a proposé différentes solutions pour la construction, le transport et l'installation des éoliennes offshore et de leur structure de support et d'ancrage.

Les solutions proposées impliquent la mise en oeuvre en général de moyens de levage par traction conventionnelle avec des engins de levage du type grue. Toutefois, les structures support et éoliennes une fois construites représentent de grandes dimensions et des charges importantes, et leur installation à l'aide de grues agissant par traction requiert des grues de grandes dimensions, et notamment d'une hauteur supérieure à celle de la structure et de l'éolienne. Pour des éoliennes des dimensions mentionnées ci-dessus, il est nécessaire de mettre en oeuvre des grues d'au moins 350 tonnes munies de flèche de levage d'au moins 50m, généralement de près de 100 m de long, de telles grues étant difficiles à monter et à déplacer, notamment à transporter et à opérer en mer. On peut difficilement envisager de transporter de tels moyens de levage du type grue sur des barges flottantes, comme cela peut être le cas dans certaines opérations des champs pétroliers offshore, compte tenu des coûts importants occasionnés.

Plusieurs types de structure de support et d'ancrage d'éolienne sont connus.

Un mode de réalisation consiste à poser sur le sol une structure de type embase gravitaire massive pleine ou creuse mais lestée reposant sur le sol marin et assurant un ancrage de par son propre poids, au sommet de laquelle est solidaire une bride sur laquelle on vient positionner le pylône de l'éolienne équipée d'une contre-bride identique. Plus particulièrement, une telle embase supporte une cavité tubulaire supérieure destinée à recevoir la base du pylône de ladite éolienne, ladite cavité tubulaire qui restant émergée au-dessus de la surface de la mer lorsque ladite structure est installée au fond de la mer.

On distingue plusieurs variantes de réalisation de ces structures de support et d'ancrage du type embase gravitaire.

Dans une première variante, ladite embase est massive pleine, en général en béton, ou creuse, c'est-à-dire formant un caisson mais rempli de moyens de lestage, notamment des granulats de matériaux de haute densité tels que des granulats de fer. Ces embases nécessitent de gros moyens de grutage pour les installer car elles ne flottent pas du tout.

Dans une deuxième variante, pour optimiser la quantité de matière mise en oeuvre et en diminuer le coût, ladite embase forme un caisson creux, notamment à paroi en béton, que l'on remplit d'eau de mer progressivement durant leur immersion pour que leur paroi ne supporte pas un différentiel de pression hydrostatique excessif lorsqu'elles sont immergées. Ces embases ont très peu de volume de flottaison et sont relativement plus légères, mais elles nécessitent encore de gros moyens de grutage pour les installer.

Une troisième variante consiste à ne remplir d'eau qu' une partie seulement du volume interne de l'embase pour lui conférer un volume de flottaison que l'on peut moduler et contrôler pour son remorquage en mer et sa descente au fond de la mer. Pour ce faire, on ménage plusieurs compartiments délimités par des cloisons séparatives en béton dans le volume interne du caisson formant ladite embase, ce qui a pour effet de limiter les effets de carène liquide et de ménager des ballasts de relativement faible volume. Ces embases sont dites « autoinstallables » en ce qu'elles ne nécessitent pas de gros moyens d'installation puisqu'elles sont capables de s'immerger seules. Elles offrent un volume de flottaison plus important leur conférant la stabilité requise. Mais, l'épaisseur des parois doit pouvoir compenser la différence de pression hydrostatique avec l'extérieur lors de l'immersion (certaines parties peuvent être soumises à des différences de pression importantes en fonction de la profondeur d'immersion.

En général, les caissons creux ou massifs reposant sur le fond marin constituant ces embases gravitaires présentent une forme parallélépipédique, ou de surface de révolution, notamment cylindrique ou de préférence tronconique.

Il existe plusieurs façons de transporter et d'installer en mer des embases gravitaires de ce type.

Une première solution consiste en un transport sur une barge puis dépose par une grue de taille importante et donc couteuse compte tenu de la masse et encombrement de cette structure tubulaire.

Une autre solution consiste dans l'ajout de flotteurs fixés à la structure pour transporter par remorquage la structure en flottaison puis dépose au fond de la mer par ballastage des flotteurs. Mais, cette solution est aussi onéreuse car elle nécessite des renforts locaux sur la structure de manière à faire passer les efforts au niveau des fixations des flotteurs sur la structure.

Dans WO 03/066426 et WO2011/007066 au nom de la demanderesse on a décrit des moyens de transport et dépose au fond de la mer d'éolienne et de leur structure de support et d'ancrage à l'aide d'un navire du type catamaran.

Du fait du nombre important d'embases à poser par champ, il est nécessaire de développer une embase impliquant des moyens de transport et de pose moins couteux à mettre en oeuvre.

Dans GB 2481321, on décrit un système de flotteurs de forme cylindriques appliqués autour d'une embase d'éolienne. Lesdits flotteurs présentent une partie de volume relativement petit qui peut faire l'objet d'un ballastage et ils sont combinés à des propulseurs pour déplacer les flotteurs y compris pour la descente de la structure au fond de la mer. Mais, l'immersion complète au fond de la mer de la structure requière toujours la mise en oeuvre d'un système additionnel complexe de ballastage-déballastage à l'eau de mer interne au pylône de l'éolienne.

Dans WO2009/154472, on décrit une éolienne dont la paroi de l'embase est une structure creuse à double peau destinée à être remplie de béton. On met en oeuvre des caissons flotteurs 26 autour de la partie émergée de l'embase pour le remorquage de la tour en surface. Les flotteurs coopèrent mécaniquement avec l'embase de telle sorte qu'une translation verticale relative limitée des flotteurs par rapport à l'embase est autorisée selon le niveau de ballastage relatif des flotteurs et de l'embase. Mais les flotteurs 26 restent toujours flottants en surface même si leur ballastage permet de descendre l'embase à faible profondeur (8 à 30m).

La présente invention vise à faciliter l'installation d'une structure de support et ancrage d'éolienne du type embase gravitaire comprenant un caisson creux ou massif reposant sur le fond marin et assurant un ancrage de par son propre poids, sur un site immergé loin des côtes, proposant structure de support et ancrage d'éolienne plus simple à construire et à installer. Plus particulièrement, le but de la présente invention est de fournir un nouveau procédé de transport et dépose d'une embase gravitaire de ce type, notamment à la fois plus facile et moins couteux à mettre en oeuvre que les procédés de l'art antérieur, et fournir une nouvelle embase d'éolienne du type embase gravitaire qui soit optimisée en quantité de matière mais qui soit aussi en partie autoinstallable avec des moyens d'installation relativement peu encombrant et peu couteux et de mise en oeuvre aisée.

Pour ce faire, la présente invention fournit un procédé de transport et dépose au fond de la mer d'une structure sous-marine de support et d'ancrage d'un équipement marin, de préférence une éolienne, ladite structure sous-marine de support et d'ancrage comprenant une embase gravitaire comprenant un premier bloc massif ou de préférence premier caisson creux rempli au moins partiellement de moyens de lestage, reposant sur le fond marin et assurant un ancrage de par son propre poids ; ledit premier bloc ou caisson gravitaire comprenant une surface externe supérieure supportant un mat et/ou cavité tubulaire apte à recevoir la base du pylône d'une éolienne, une surface inférieure plane apte à reposer au fond de la mer et une surface externe latérale, de préférence imperméable, procédé dans lequel on réalise les étapes suivantes :a) on remorque ladite embase équipée d'éléments de flottaison, puisb) on descend ladite embase au fond de la mer,et dans lequel:- avant l'étape a), on fixe de manière amovible sur la surface externe dudit premier bloc ou premier caisson gravitaire, une pluralité de deuxièmes caissons creux de flottabilité et ballastage, et- à l'étape a), on vide au moins partiellement au moins une partie desdits deuxièmes caissons, et- à l'étape b), on ajoute de l'eau de mer dans lesdits deuxièmes caissons pour descendre ladite embase jusqu'au fond de la mer, de préférence lesdits deuxièmes caissons restant partiellement seulement remplis d'eau de mer, et- après l'étape b), on désolidarise lesdits deuxièmes caissons et on les vide, de préférence progressivement, de manière à les remonter en surface par flottaison, de préférence progressivement,caractérisé en ce que :- on fixe une pluralité de dits deuxièmes caissons de même forme et mêmes dimensions, symétriquement répartis sur ladite surface latérale externe de forme tronconique du premier bloc ou premier caisson par rapport à un plan de symétrie dudit premier bloc ou caisson passant par l'axe de révolution ZZ' du premier bloc ou premier caisson, les surfaces latérales externes et surfaces latérales internes desdits deuxièmes caissons définissant des surfaces de révolution de forme tronconique autour d'un même axe de révolution ZZ' que ladite surface latérale externe dudit premier bloc ou premier caisson,- chaque dit deuxième caisson comprenant une surface latérale interne épousant la forme de la partie de dite surface latérale externe de premier bloc ou caisson en vis à vis de laquelle il est appliqué, lesdits deuxièmes caissons étant disposés de manière à ce que l'ensemble desdits deuxièmes caissons recouvre la totalité de ladite surface latérale externe, chaque dit deuxième caisson comprenant au moins une vanne ouvrant sur l'extérieur, et
- la distance (d) entre lesdites surfaces internes et surfaces externes desdits deuxièmes caissons est inférieure à 1/3 de leur hauteur dans la direction axiale ZZ', et
- à l'étape b), la descente de l'embase peut être réalisée en contrôlant uniquement le remplissage des deuxièmes caissons.
Plus particulièrement, à l'étape b), la descente de l'embase peut être réalisée en contrôlant uniquement le remplissage des deuxièmes caissons, à l'exclusion de tout autre ballastage contrôlé de ladite embase et/ou à l'exclusion de tout propulseur.
A l'étape a), le volume interne desdits deuxièmes caissons peut rester entièrement vide.
On entend par «vanne ouvrant sur l'extérieur» une vanne débouchant sur une face du deuxième caisson autre que la face en vis-à-vis de ladite surface externe de premier caisson sur laquelle elle est appliquée.
On comprend que lesdits deuxièmes caissons sont disposés ou répartis autour de ladite surface externe de manière à pouvoir contrôler et de préférence équilibrer la flottaison apportée par le ou les deuxièmes caissons autour de ladite embase pour que son assiette et/ou sa gite soit stabilisée et son tirant d'eau puisse être ajusté plus aisément.
Contrairement aux systèmes de flotteurs additionnels habituels, le recouvrement homogène de toute la surface externe latérale du premier caisson par les deuxièmes caissons sur la totalité de sa circonférence et sur toute sa hauteur permet :
- de répartir de manière homogène les charges transférées au niveau des fixations sur le premier caisson et la reprise des efforts par le premier caisson conférant une meilleure résistance mécanique structurelle, et
- de mettre en oeuvre un ou des deuxième caissons d'épaisseur relativement réduite ce qui en facilite la mise en place et la fixation entre eux et/ou sur l'embase ainsi que le déplacement de l'ensemble.

L'ajout des deuxièmes caissons permet d'éliminer toutes les cloisons séparatives requises à l'intérieur du premier caisson le cas échéant ce qui par la même aussi évite de mettre en oeuvre des parois du deuxième caisson résistant à la pression de l'eau ce qui représente aussi un gain de poids et de temps de construction de l'embase gravitaire.

La taille et pluralité des deuxièmes caissons permet de disposer de compartiments de ballastage de plus petite dimension et avec des effets de carène liquide réduit.

Du fait que l'embase ainsi équipée devient flottante, et le transport de l'embase peut être réalisé par simple remorquage, la mise en place desdits deuxièmes caissons est aisée en les déplaçant en flottaison jusqu'à ladite surface externe du premier caisson.

Une fois l'embase équipée de ses deuxièmes caissons arrivée sur le site, l'immersion peut être réalisée en ballastant uniquement lesdits deuxièmes caissons.

A tous les stades de l'immersion, l'embase peut être stabilisée en contrôlant la répartition du remplissage d'eau dans les différents deuxièmes caissons autour dudit premier caisson.

Il est possible de mettre en oeuvre un premier caisson avec un volume interne vide que l'on laisse se remplir d'eau lors de l'immersion de manière à éliminer les problèmes de différence de pression de chaque côté de ses parois. Il est ainsi possible d'obtenir une très bonne réserve de stabilité durant toutes les phases d'immersion et donc d'éliminer tous les cloisons séparatives éventuelles à l'intérieur de l'embase ce qui représente un gain de poids et de temps de construction du premier caisson. Les effets de carènes liquides ne sont plus suffisamment déstabilisants face à la poussée supplémentaire fournie par les deuxièmes caissons.

Une fois l'immersion de l'embase réalisée, il est facile par ballastage puis déballastage des deuxièmes caissons de les déconnecter de l'embase et de les récupérer en flottaison.

La séquence d'installation peut donc être réalisée uniquement en pilotant le remplissage des deuxièmes caissons.

De préférence, à l'issue de l'étape b), une fois ladite embase posée au fond de la mer, lesdits deuxièmes caissons restent partiellement seulement rempli(s) d'eau de mer. Ainsi, il est plus facile de les désolidariser en les remplissant entièrement d'eau avant de les désolidariser puis contrôler leur remontée en surface par déballastage après leur déconnection.

Plus particulièrement, la distance (d) entre lesdites parois internes et parois externes desdits deuxièmes caissons est de 1/5 à 1/3 de leur hauteur (h) dans la direction axiale ZZ'.

Plus particulièrement, lesdits deuxièmes caissons s'étendent sur plus de la moitié de la hauteur dudit premier bloc ou premier caisson de l'embase, de préférence depuis l'extrémité supérieure de ladite embase jusqu'en dessous de son centre de gravité, de préférence sur toute la hauteur dudit premier bloc ou premier caisson.

Avantageusement, le dimensionnement et positionnement desdits deuxièmes caissons et leur taux de remplissage partiel éventuel peuvent être déterminés en fonction du poids et volume dudit premier caisson et de manière à ce que la hauteur métacentrique (GM) de ladite structure support reste positif et que l'embase une fois équipée desdits deuxièmes caissons selon l'invention reste stable pendant son remorquage en mer, de préférence avec un faible tirant d'eau, et pendant la phase d'immersion.
De façon connue, on entend ici par « hauteur métacentrique » (GM) la distance entre le centre de gravité de ladite tour (G) et son métacentre (M). Le métacentre se définit comme l'intersection entre l'axe de la résultante de la poussée d'Archimède appliquée au centre de flottabilité ou centre de carène et l'axe vertical passant par le centre de gravité.
Selon d'autres caractéristiques préférées:- à l'étape a), lesdits deuxièmes caissons sont appliqués contre le premier bloc ou premier caisson en ménageant un espace intercalaire entre la face interne de chaque deuxième caisson et la surface externe latérale du premier bloc ou premier caisson, ledit espace intercalaire étant rendu étanche par au moins un joint, et on réalise une dépression dans cet espace intercalaire pour fixer ledit deuxième caisson contre ledit premier caisson, et- après l'étape b), on désolidarise lesdits deuxièmes caissons, en remettant à la pression hydrostatique extérieure ledit espace intercalaire.
Typiquement, ledit espace intercalaire représente une distance d entre le premier bloc ou caisson et le deuxième caisson de 1 à 10 cm. Ledit premier bloc ou premier caisson comprend une surface latérale externe tronconique avec de préférence un radier constituant un rebord plat périphérique inférieur à sa base et une surface supérieure plate formant un rebord plat périphérique supérieur autour d'un mat et/ou cavité tubulaire de support de pylône.
Plus particulièrement, lesdites surfaces latérales internes et surfaces latérales externes desdits deuxièmes caissons sont des parties de surfaces tronconiques. On comprend que lesdites parties sont des sections angulaires de surfaces tronconiques s'étendant sur toute la hauteur de la surface latérale du premier bloc ou caisson et une partie seulement de la circonférence latérale dudit premier caisson.

Plus particulièrement encore, on fixe deux deuxièmes caissons recouvrant chacun sensiblement la moitié de ladite surface externe latérale tronconique dudit premier bloc ou premier caisson, la face interne de chaque deuxième caisson coopérant en fixation étanche sur le premier bloc ou premier caisson avec au moins un joint périphérique comprenant :
- une partie semi-circulaire de joint supérieur au niveau dudit rebord plat périphérique supérieur, et
- une partie semi-circulaire de joint inférieur au niveau dudit rebord plat périphérique inférieur, et
- deux parties de joint latérales, disposées de préférence dans des plans radiaux par rapport à l'axe de révolution ZZ' du premier bloc ou premier caisson, chaque dite partie de joint latérale s'étendant depuis une extrémité de la partie de joint semi-circulaire supérieure jusqu'à une extrémité de la partie de joint semi-circulaire inférieure située du même côté par rapport à un plan de symétrie dudit deuxième caisson passant par l'axe de révolution ZZ' du premier bloc ou premier caisson.

On comprend que les deux parties de joint latérales sont disposées symétriquement par rapport au plan de symétrie P1 dudit deuxième caisson passant par l'axe de révolution ZZ' du premier bloc ou premier caisson

Plus particulièrement encore, au moins une partie desdits deuxièmes caissons comprennent chacun une pluralité de compartiments internes cloisonnés par des cloisons séparatives et chaque compartiment interne étant autonome.

Plus particulièrement, lesdites cloisons séparatives s'étendent dans un plan radial par rapport audit axe de révolution ZZ' dudit deuxième caisson.

Plus particulièrement encore, lesdits deuxièmes caissons et/ou desdits compartiments internes cloisonnés desdits deuxièmes caissons sont équipés de vannes ouvrant sur l'extérieur, de préférence une pluralité de vannes de différents diamètres selon lesdits deuxièmes caissons et/ou selon lesdits compartiments internes, et on réalise le déballastage desdits deuxièmes caissons et/ou dits compartiments internes à l'aide de moyens de pompage sur un bateau d'assistance reliés à des tuyaux souples.

Ceci permet de réaliser un ballastage lent et contrôlé durant la phase d'immersion avec les vannes de plus petit diamètre et pour les autres vannes de plus grand diamètre un ballastage rapide une fois l'embase posée.

Plus particulièrement encore, ledit premier caisson comprend un unique compartiment interne que l'on remplit d'eau en cours d'immersion à l'étape b).

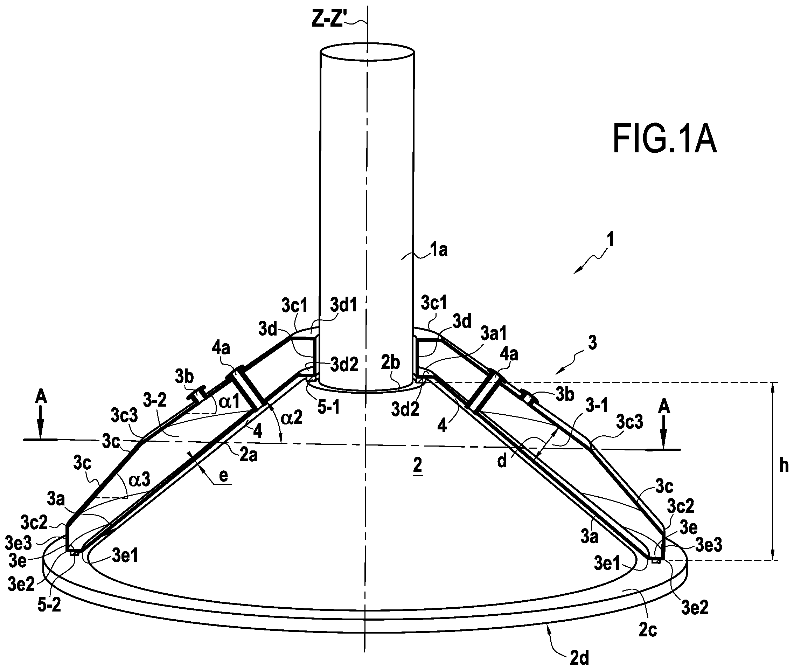

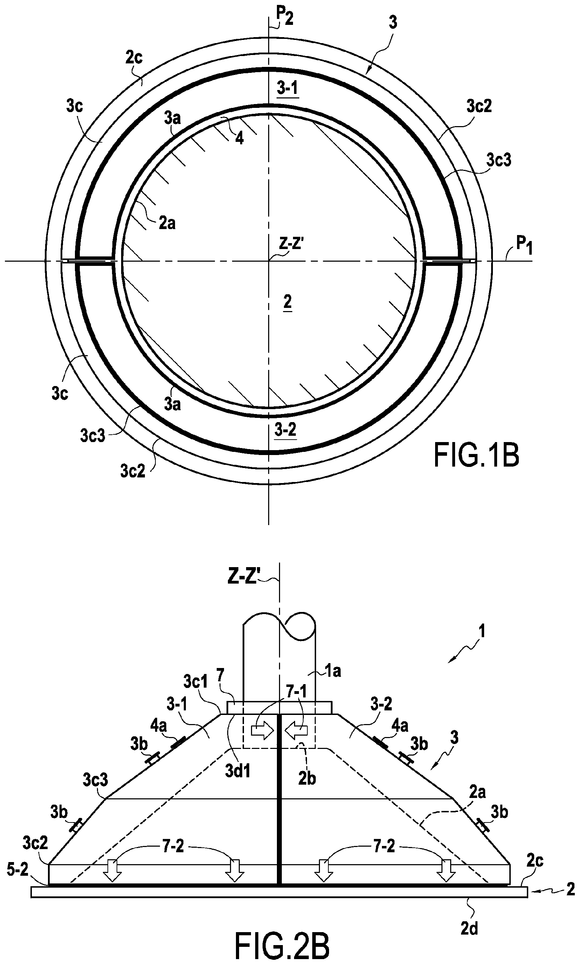

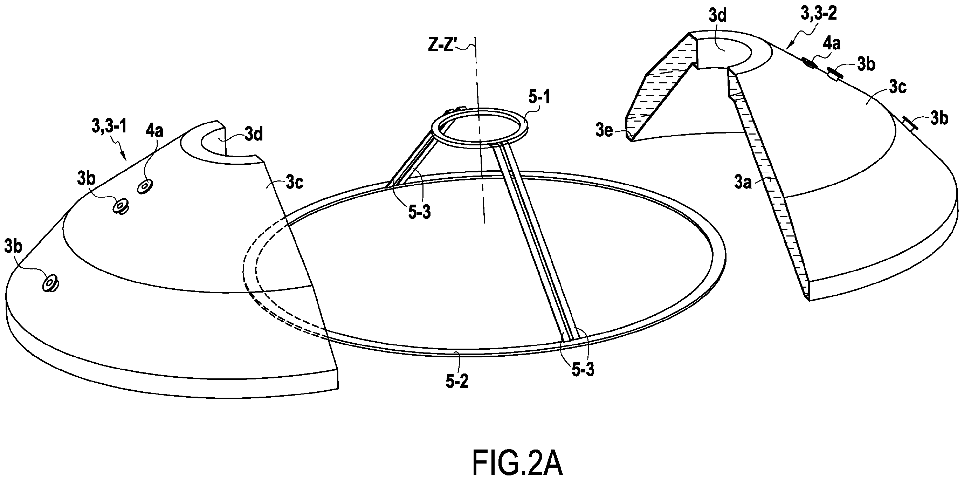

La présente invention fournit également une structure sous-marine de support et d'ancrage comprenant une embase gravitaire comprenant un premier bloc massif ou premier caisson creux rempli au moins partiellement de moyens de lestage, de préférence de l'eau, reposant sur le fond marin et assurant un ancrage de par son propre poids; ledit premier bloc ou premier caisson gravitaire comprenant une surface supérieur supportant un mat et/ou cavité tubulaire apte à recevoir la base du pylône d'une éolienne, une surface inférieure plane apte à reposer au fond de la mer et une surface externe latérale, de préférence imperméable, utile dans un procédé selon l'invention et telle que définie ci-dessus caractérisée en ce qu'elle comprend une pluralité de dits deuxièmes caissons de même forme et mêmes dimensions, fixés audit premier bloc ou caisson, symétriquement répartis sur ladite surface externe latéral de forme tronconique du premier bloc ou premier caisson par rapport à un plan de symétrie dudit premier bloc ou caisson passant par l'axe de révolution ZZ' du premier bloc ou premier caisson, les surfaces externes et surfaces internes desdits deuxièmes caissons définissant des surfaces de révolution de forme tronconique autour d'un même axe de révolution ZZ' que ladite surface externe dudit premier bloc ou premier caisson,
- chaque dit deuxième caisson comprenant une surface interne épousant la forme de la partie de dite surface externe de premier bloc ou caisson en vis à vis de laquelle il est appliqué, lesdits deuxièmes caissons étant disposés de manière à ce que l'ensemble desdits deuxièmes caissons recouvre la totalité de ladite surface externe latérale, chaque dit deuxième caisson comprenant au moins une vanne ouvrant sur l'extérieur,
- la distance (d) entre lesdites surfaces internes et surfaces externes desdits deuxièmes caissons est inférieure à 1/3, de préférence inférieure de 1/5 à 1/3, de leur hauteur dans la direction axiale ZZ'.
Plus particulièrement, lesdits premier bloc ou premier caisson gravitaires sont réalisés en béton et lesdits deuxièmes caissons de flottabilité et ballastage sont réalisés en acier.
D'autres caractéristiques et avantages de la présente invention apparaîtront à la lumière de la description qui va suivre, qui se réfère aux dessins annexés et qui illustre sans aucun caractère limitatif des modes préférentiels de réalisation de l'invention :- la figure 1A représente une vue d'une structure de support et d'ancrage du type embase gravitaire (1) selon l'invention équipée d'un deuxième caisson 3 ou deux deuxièmes caissons 3-1 et 3-2 vue en coupe verticale, entourant un premier caisson tronconique 2 et fixé(s) à celui-ci via un joint d'étanchéité 5;- la figure 1B représente une vue en coupe AA de la figure 1A, d'une embase gravitaire 1 équipée de deux deuxièmes caissons 3-1,3-2 qui recouvrent chacun sensiblement la moitié du pourtour de la paroi latérale 2a du premier caisson 2;- la figure 2A représente une vue en perspectives des deux caissons 3-1 et 3-2 montrant le joint 5 et ses parties 5-1, 5-2 et 5-3 ;
- la figure 2B est une vue montrant un deuxième mode de fixation au mat la et/ou au radier 2c des deux deuxièmes caissons 3-1 et 3-2, combiné à blocage dans la direction verticale avec un épaulement 7 ;
- la figure 3 montre en coupe horizontale selon AA d'un deuxième caisson 3-1 comprenant des 3 compartiments internes 3i séparés par deux cloisons verticales 3j disposées radialement équipés de vannes 3b débouchant sur l'extérieur ;
- la figure 4 représente une vue en coupe vertical axial du premier caisson 2 montrant un compartiment central vide avec des parois latérales tronconique 2a, supérieure 2b et inférieure 2c ;
- la figure 5A montre une embase 1 flottant en surface 10 en coupe verticale avec les deuxièmes caissons 3-1 et 3-2 et le compartiment central 2i vides ;
- la figure 5B montre la descente au fond de la mer de l'embase avec un ballastage complet du compartiment central 2i du premier caisson et ballastage partiel des deuxièmes caissons 3-1, 3-2 ;
- la figure 5C montre une embase 1 après sa dépose au fond de la mer 11, en cours de ballastage avant démontage, puis déballastage et récupération après démontage des deuxièmes caissons 3-1 et 3-2 ;
- la figure 6 montre une embase au fond de la mer après démontage des deuxièmes caissons et pose de l'éolienne 12 au sommet d'une cavité tubulaire 1a.

Sur la figure 1, on a représenté une structure sous-marine de support et d'ancrage d'éolienne 12 comprenant une embase gravitaire 1 comprenant un premier caisson 2, en béton, présentant une surface latérale externe 2a, tronconique, avec une plateforme supérieure 2b circulaire supportant un mat la au sommet duquel une cavité tubulaire est apte à recevoir la base du pylône 12a d'une éolienne 12, ledit premier caisson 2 comprend à sa base une galette en béton cylindrique formant un radier 2c dont la surface inférieure plane 2d est apte à reposer au fond de la mer.

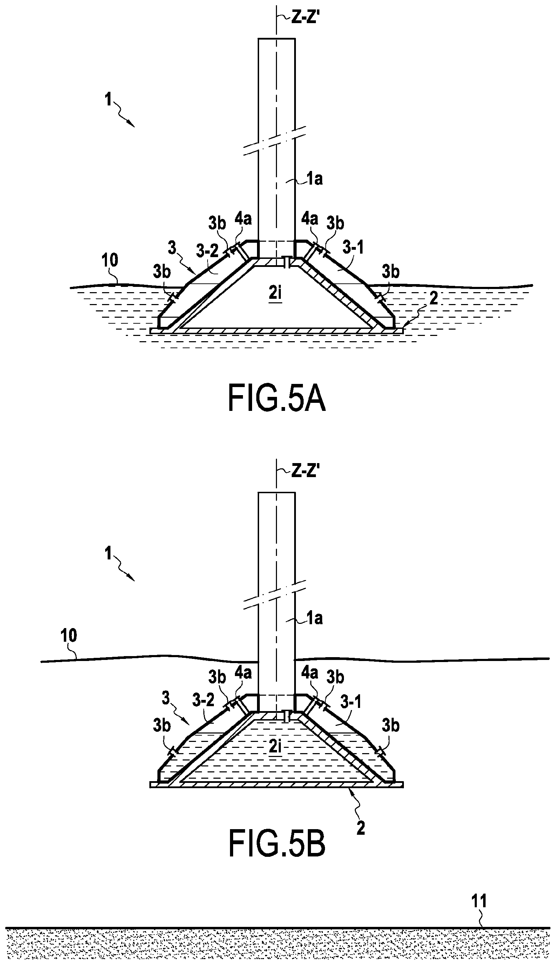

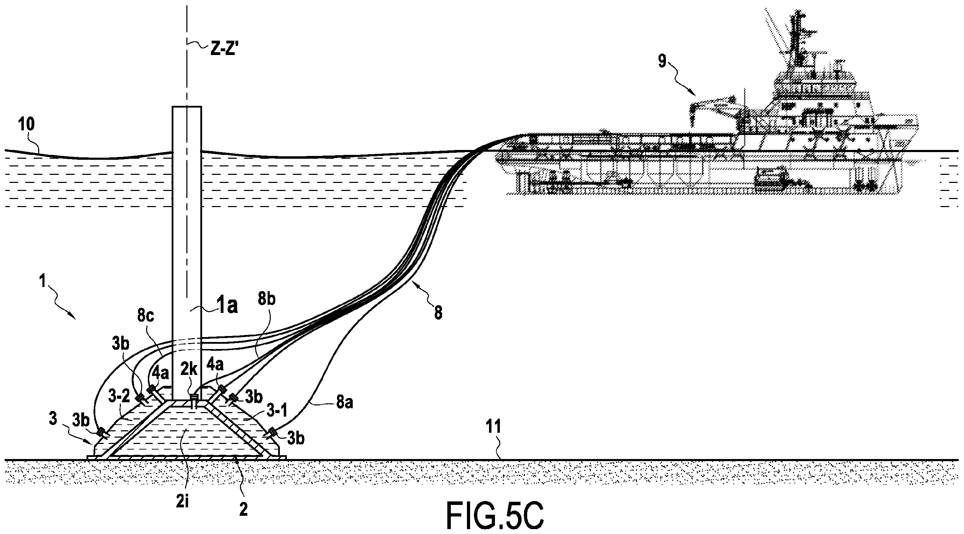

Sur la figure 5, on a représenté une variante de réalisation dans laquelle le bloc massif 2 est en fait un premier caisson renfermant un compartiment interne 2i délimitant un volume vide susceptible d'être rempli d'eau via moins une vanne 2k.

Dans tous les modes de réalisation, ledit premier caisson 2 est entouré de deuxièmes caissons de flottabilité et ballastage 3, 3-1, et 3-2 en acier.

Dans un premier mode de réalisation de l'invention décrite dans les figures 1A, 1B et 2A-2B, avec deux deuxièmes caissons 3-1 et 3-2 recouvrant une surface externe tronconique 2a du premier caisson 2, chaque deuxième caisson 3-1 et 3-2 comporte au moins :
- une surface supérieure demi-cylindrique verticale 3d apte à épouser une demi-circonférence du mat la et à reposer sur la demi surface annulaire de la plateforme supérieure 2b du premier caisson 2 via un joint d'étanchéité dei semi-circulaire 5-1 décrit ci-après, et
- une surface inférieure annulaire plate 3e reposant sur le rebord périphérique plat annulaire 2c constituant la surface supérieure du radier 2c s'étendant sur une demi circonférence de celui-ci, coopérant avec celui-ci via un deuxième joint d'étanchéité semi-circulaire 5-2 ; et
- une surface latérale interne 3a et surface latérale externe 3c assurant la liaison entre les extrémités des surfaces 3d et 3e.

Les deux deuxièmes caissons 3-1 et 3-2 sont de même forme et disposés symétriquement par rapport à un plan P1 passant par l'axe ZZ' de la surface tronconique latérale 2a du premier caisson 2 et du mat 1a.

Cette disposition des deuxièmes caissons 3-1 et 3-2 est avantageuse en ce qu'elle présente un recouvrement maximal du premier caisson 2 tout en facilitant la fixation des deuxièmes caissons 3-1 et 3-2 à la surface du premier caisson 2.

En effet, la forme semi tronconique des parois des deuxièmes caissons 3-1, 3-2 leur permet de pouvoir flotter dans une position verticale appropriée pour être déplacés en flottaison et assemblés symétriquement autour et contre le premier caisson sans l'aide d'une grue. En outre, du fait que la combinaison des deux deuxièmes caissons 3-1 et 3-2 recouvre entièrement la surface externe du premier caisson 2, il suffit de maintenir entre chaque deuxième caisson 3-1 et 3-2 et la surface externe du premier caisson 2, une dépression en pompant l'air de l'espace intercalaire 4 entre les joints 5 d'une part et les surface interne 3a et surface externe 2a pour réaliser une fixation entre lesdits deuxièmes caissons 3-1 et 3-2 et ledit bloc ou premier caisson 2 par simple dépression d'air.

Sur la figure 2B, on a représenté un joint d'étanchéité 5 appliqué sur un premier bloc ou premier caisson 2 comprenant :
- un joint circulaire supérieur 5-1 au niveau du rebord plat périphérique d'une plateforme supérieure 2b, et
- un joint circulaire inférieur 5-2 de plus grand diamètre posant au niveau du rebord plat périphérique inférieur du radier 2c, et
- deux joints latéraux 5-3 disposés dans des plans radiaux passant par l'axe ZZ' et assurant la jonction entre le joint circulaire supérieur 5-1 et le joint circulaire inférieur 5-2 avec deux paires de joints latéraux 5-3 disposées diamétralement opposées.

Ainsi, la face interne 3a de chacun des deux caissons 3-1, 3-2 repose sur :
- une partie semi-circulaire de joint supérieur 5-1 au niveau dudit rebord plat périphérique supérieur 2b, et
- une partie semi-circulaire de joint inférieur 5-2 au niveau dudit rebord plat périphérique inférieur 2d, et
- deux parties de joint latérales 5-3, disposées de préférence dans des plans radiaux l'axe de révolution ZZ' du premier bloc ou premier caisson, chaque dite partie de joint latérale 5-3 s'étendant depuis une extrémité de la partie semi-circulaire de joint supérieur 5-1 jusqu'à une extrémité de la partie semi-circulaire de joint inférieur située du même côté par à un plan de symétrie dudit deuxième caisson passant par l'axe de révolution ZZ' du premier bloc ou premier caisson.

Ce joint 5 délimite donc deux espaces intercalaires 4 entre les faces internes 3a de chacun des deux deuxièmes caissons 3-1 et 3-2 et la face externe du premier bloc ou premier caisson 2.

On comprend que les deux parties de joint latérales 5-3 sont disposées symétriquement par rapport à un plan de symétrie dudit deuxième caisson 3-1, 3-2 passant par l'axe de révolution ZZ' du premier caisson 2.

Ainsi, une fois l'immersion de l'embase réalisée et son installation au fond de la mer, il est facile, par déballastage des deuxièmes caissons 3-1 et 3-2 d'une part, et d'autre part par remise à la pression de l'espace intercalaire 4 de faire remonter et récupérer en surface en flottaison les deuxième caisson 3-1 et 3-2.

Les extrémités des surface cylindrique 3d et surface annulaire 3e, les plus proches de la surface externe du bloc ou premier caisson 2 sont réunies entre elles par une surface latérale interne 3a semi-tronconique, de même forme que la partie de la surface externe latérale tronconique 2a du premier caisson 2 en vis-à-vis de laquelle elle est appliquée. De même, les extrémités des surface cylindrique 3d et surface annulaire 3e les plus éloignées du premier caisson 2 sont réunies entre elles par une surface de révolution formant une surface latérale externe 3c du deuxième caisson 3 comprenant des parties de forme semi-tronconique en vis-à-vis de la partie semi-tronconique de la surface latérale interne 3a.

Plus précisément, sur les figures 1 à 5, chaque deuxième caisson comprend :
- une dite surface supérieure semi-cylindrique 3d s'étendant entre une première surface supérieure plate horizontale semi- annulaire 3d1 et une deuxième surface supérieure plate horizontale semi- annulaire 3d2, cette dernière étant apte à reposer sur ladite surface semi-annulaire de la plateforme supérieure 2b du premier caisson, et
- ladite surface latérale interne 3a tronconique assure la jonction entre le bord externe 3a1 de ladite deuxième surface semi-annulaire 3d2 et le bord interne semi circulaire 3e1 de la surface inférieure semi-annulaire 3e, et
- le bord externe semi-circulaire 3e2 de la surface inférieure semi-annulaire 3e est surmontée d'une surface inférieure semi-cylindrique verticale 3e3, et
- ladite surface latérale externe 3c tronconique assure la jonction entre le bord externe 3c1 de ladite première surface semi-annulaire 3d1 et le bord externe semi-circulaire 3c1 de ladite première surface supérieure plate horizontale semi-annulaire 3d1 et le bord supérieure semi-circulaire 3c2 de ladite surface inférieure semi-cylindrique verticale 3e3.

Sur les figures 1 à 5, ladite surface latérale externe 3c de chaque deuxième caisson est constitué de :
- une partie supérieure tronconique entre ledit bord externe 3c1 de ladite première surface semi-annulaire 3d1 et une limite semi-circulaire intermédiaire 3c3 à mi-hauteur de l'embase, et
- une partie inférieure tronconique entre le bord semi-circulaire 3c2 de ladite surface inférieure semi-cylindrique verticale 3e3 et ladite limite semi-circulaire intermédiaire 3c3.

L'angle d'inclinaison α3 de la partie inférieure tronconique de ladite surface latérale externe 3c de chaque deuxième caisson par rapport à l'horizontale est supérieure à l'angle d'inclinaison α1 de la partie supérieure tronconique de ladite surface latérale externe 3c par rapport à l'horizontale. Et l'angle d'inclinaison α2 de la surface latérale interne 3a tronconique est intermédiaire compris entre α1 et α3.

Les surface latérale externe 3c et surface latérale interne 3a du deuxième caisson 3 sont espacées d'une distance d inférieure à une valeur correspondant à environ 1/5 à 1/3, notamment environ 1/4 de la hauteur h de la surface latérale tronconique 2a du premier caisson 2.

L'intercalation des joints d'étanchéité 5-1 et 5-2 permet de ménager un espace intercalaire 4 de largeur de 1 à 10 cm entre la surface externe latérale 2a du premier caisson 2 et la surface interne 3a du deuxième caisson 3.

Sur la figure 2B, on a représenté des modes de fixation alternatifs des deuxièmes caissons 3-1 et 3-2 à la surface du premier caisson 2. Chaque deuxième caisson 3-1 et 3-2 est fixé au mat la par un système mécanique de fixation 7-1 du type vérin, clavette et/ou vis.au niveau des surfaces semi cylindrique 3d du type vérin, clavette et/ou vis qui assurent la liaison entre des deux deuxièmes caissons 3-1, 3-2. Alternativement et/ou en complément, la surface inférieure 3c des deuxièmes caissons 3-1 et 3-2 est fixée à la surface supérieure du radier 2c à un mode de fixation mécanique 7-2 du type vérin, clavette et/ou vis. Enfin, un anneau 7 soudé autour et sur le mat la de l'embase 1 faisant office d'épaulement sur la sous face duquel viennent s'appuyer les deux flotteurs 3-1 et 3-2 pour compléter leur fixation et empêcher toute translation verticale. Ainsi, le premier caisson est bloqué par les deux deuxièmes caissons 3-1 et 3-2 qui l'entourent.

Dans un mode de réalisation, le premier caisson 2 représente typiquement une masse de 1000T à 7000T à vide (et 2 à 3 fois plus une fois rempli d'eau) correspondant à une hauteur h de 4 à 20 m et un diamètre inférieur de la surface 2d reposant au fond de la mer de 20 à 60m et un diamètre de la, plateforme supérieur 2b de 5 à 12 m.

Plus particulièrement, lesdits deuxièmes caissons de flottabilité et ballastage sont de dimensions et poids suivants :
- poids de 200 à 2000T,
- hauteur, h=3 à 30 m,
- distance d entre les faces interne 3a et externe 3c de 1 à 5m,
- grand diamètre inférieur externe: de 20 à 80 m,
- petit diamètre supérieur de 5 à 25m.

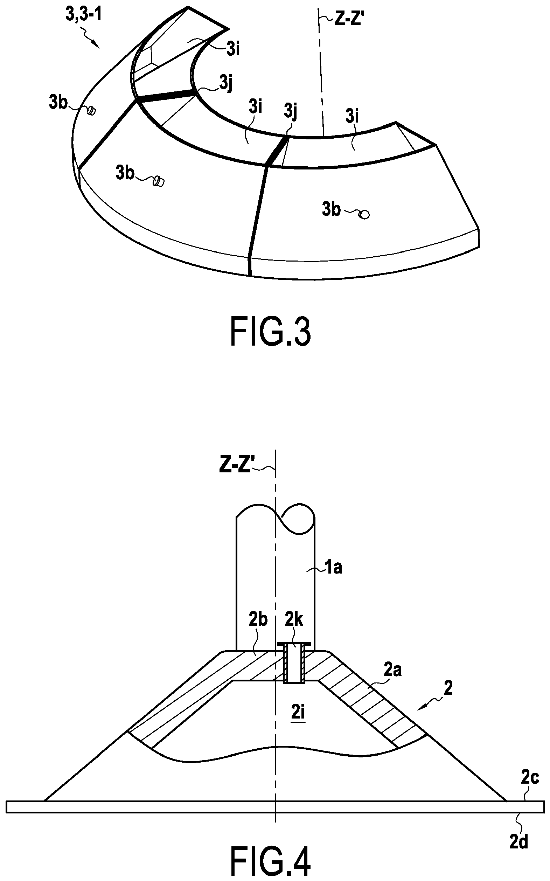

Sur la figure 3, on a représenté un mode de réalisation avantageux dans lequel chaque deuxième caisson 3-1, 3-2 comporte trois compartiments internes 3i séparés par des cloisons séparatives 3j, disposées radialement c'est-à-dire dans un plan passant par l'axe ZZ' des surfaces de révolution interne 3a et surface de révolution externe 3d.

Chaque compartiment interne 3i est équipé de préférence d'une pluralité de vannes 3b ouvrant sur l'extérieur, de préférence de différents diamètres, pour permettre pour la moitié des vannes, un ballastage lent et contrôlé durant la phase d'immersion et pour l'autre moitié des vannes un déballastage plus rapide pour le démontage et la récupération des deuxièmes caissons 3-1, 3-2, une fois l'embase posée au fond de la mer.

Pour ce faire, les vannes 3b, 2k et 4a du premier caisson 2 et des deuxièmes caissons 3-1, 3-2 sont connectés à un réseau de tuyaux souples 8 reliés à un bateau d'assistance 9 disposant de pompe dans le but de désolidariser les deuxièmes caissons 3-1, 3-2 pour les récupérer et déballaster lesdits deuxièmes caissons 3-1, 3-2 après désolidarisation de la surface externe du bloc ou premier caisson 2.

Du fait de la multiplicité des compartiments 3i, les effets de carène liquide ne sont plus suffisamment déstabilisants et la multiplicité des compartiments 3i permet de contrôler l'assiette, la gite et le tirant d'eau de manière parfaitement ajustée des deuxièmes caissons 3-1 et 3-2 pour venir enveloppé la surface externe du bloc ou premier caisson 2 sans moyen de grutage. La séquence d'installation desdits deuxièmes caissons 3-1 et 3-2 et la mise en place de la structure au fond de la mer est donc réalisée uniquement en pilotant et en contrôlant le remplissage des différents compartiments 3i des deuxièmes caissons 3-1 et 3-2. De même, ce mode de réalisation permet d'obtenir une très bonne stabilité de l'embase gravitaire 1 durant toutes les phases d'immersion.

Sur la figure 4, on a représenté un premier mode de réalisation d'un compartiment central 2i de forme tronconique, à l'intérieur du bloc ou premier caisson 2, lequel peut être rempli partiellement de moyens de lestage tel que des gravats ou de préférence rempli d'eau par l'intermédiaire de sa vanne supérieure 2k pour faciliter le contrôle de son immersion lors de sa descente progressive au fond de la mer et/ou pour contrôler sa stabilité en cours de flottaison et surtout pour égaliser les pressions de part et d'autre des parois en béton du premier caisson 2 et ainsi éviter son implosion lors de l'immersion lorsque les parois de celui-ci ne supportent pas de grosses différences de pression. L'épaisseur des parois en béton du premier caisson sont typiquement de 0.5 à 1m d'épaisseur.

Sur la figure 5A, les deuxièmes caissons 3-1 et 3-2 ainsi que le compartiment central 2i du premier caisson 2 sont vides et l'embase 1 flotte en surface.

Sur la figure 5B, on a commencé l'auto immersion de l'embase 1 par remplissage progressif partiel des deuxièmes caissons 3-1 et 3-2 et remplissage complet du compartiment central 2i du premier caisson 2.

L'ouverture des vannes 3b et 2k peut être réalisée via des câbles de commande 8a et l'alimentation en eau et en air peut se faire via des tuyaux 8b pour les vannes 3b et 8c pour les vannes 4a pour l'espace 4. Ces câbles de pilotage et tuyaux d'alimentation ou évacuation/ aspiration sont reliés à des moyens de pompage sur le pont d'un navire d'assistance en surface 9 comme représenté sur la figure 5C.

Une fois arrivés au fond de la mer, les deuxièmes caissons 3-1, 3-2 peuvent avantageusement rester partiellement vides et le compartiment 2i est entièrement rempli d'eau. A ce moment, le cas échéant, on remplit entièrement d'eau les deuxièmes caissons. Une fois pleins, on peut les déconnecter et commencer le vidage partiel des deuxièmes caissons 3-1 et 3-2, le compartiment central 2i restant rempli d'eau. Du fait que les deuxièmes caissons sont pleins, ils deviennent pesants sur le premier caisson 2 de sorte que les fixations mécaniques 7-1, 7-2 ne sont plus en traction au moment de la libération des deuxièmes caissons ce qui permet de mieux contrôler leur remontée par déballastage après déconnection.

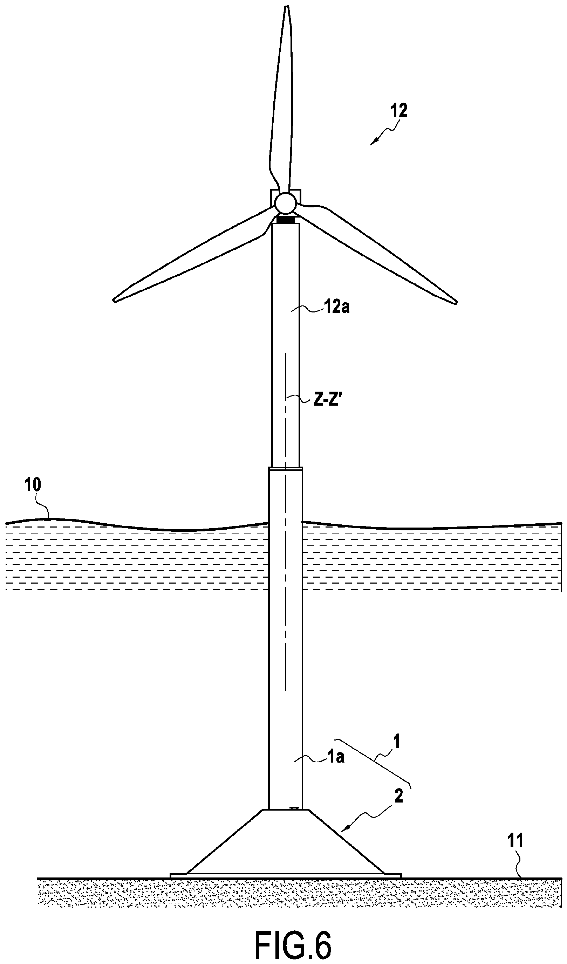

Lorsque les deuxièmes caissons sont fixés par dépression dans l'espace intercalaire 4, pour déconnecter les deuxièmes caissons 3-1, 3-2 on rétablit l'espace intercalaire 4 à la pression en envoyant de l'air par un tuyau 8c vers une vanne 4a depuis le navire d'assistance 9 ce qui permet - après leur déballastage - de récupérer les deuxièmes caissons 3-1 et 3-2 en surface en flottaison et ne laisser au fond de la mer que le bloc 2 supportant l'éolienne 12 comme représenté figure 6.

## Revendications

1. Procédé de transport et dépose au fond de la mer d'une structure sous-marine de support et d'ancrage d'un équipement marin, de préférence une éolienne, ladite structure sous-marine de support et d'ancrage comprenant une embase gravitaire (1) comprenant un premier bloc massif ou premier caisson creux (2) rempli de moyens de lestage, reposant sur le fond marin (11) et assurant un ancrage de par son propre poids ; ledit premier bloc ou caisson gravitaire (2) comprenant une surface externe supérieure (2b) supportant un mat et/ou un dispositif supérieur (1a) apte à recevoir la base du pylône (12a) d'une éolienne (12), une surface inférieure plane (2d) apte à reposer au fond de la mer et une surface externe latérale (2a), de préférence imperméable, procédé dans lequel on réalise les étapes suivantes :
a) on remorque ladite embase (1) équipée d'éléments de flottaison, puis
b) on descend ladite embase au fond de la mer,
et dans lequel :
- avant l'étape a), on fixe de manière amovible sur la surface externe (2a, 2b, 2c) dudit premier bloc ou premier caisson gravitaire (2) une pluralité de deuxièmes caissons creux de flottabilité et ballastage (3-1, 3-2), et
- à l'étape a), on vide au moins partiellement au moins une partie desdits deuxièmes caissons (3, 3-1, 3-2), et
- à l'étape b), on ajoute de l'eau de mer dans lesdits deuxièmes caissons (3, 3-1, 3-2) pour descendre ladite embase (1) jusqu'au fond de la mer (11), de préférence lesdits deuxièmes caissons (3, 3-1, 3-2) restant partiellement seulement remplis d'eau de mer, et
- après l'étape b), on désolidarise lesdits deuxièmes caissons (3, 3-1, 3-2) et on les vide, de préférence progressivement, de manière à les remonter en surface (10) par flottaison, de préférence progressivement,
**caractérisé en ce que** :
- on fixe une pluralité de dits deuxièmes caissons (3-1, 3-2) de même forme et mêmes dimensions, symétriquement répartis sur une surface externe latérale de forme tronconique (2a) du premier bloc ou premier caisson (2) par rapport à un plan de symétrie dudit premier bloc ou caisson passant par l'axe de révolution ZZ' du premier bloc ou premier caisson, les surfaces latérales externes (3c) et surfaces latérales internes (3a) desdits deuxièmes caissons définissant des surfaces de révolution de forme tronconique de même axe de révolution (ZZ') que ladite surface latérale externe dudit premier bloc ou premier caisson (2),
- chaque dit deuxième caisson comprenant une surface latérale interne (3a) épousant la forme de la partie de dite surface latérale externe (2a, 2b, 2c) de premier bloc ou caisson (2) en vis à vis de laquelle il est appliqué, lesdits deuxièmes caissons (3-1, 3-2) étant disposés de manière à ce que l'ensemble desdits deuxièmes caissons recouvre la totalité de ladite surface latérale externe (2a), chaque dit deuxième caisson (3-1, 3-2) comprenant au moins une vanne (3b) ouvrant sur l'extérieur, et
- la distance (d) entre lesdites surfaces internes (3a) et surfaces externes (3c) desdits deuxièmes caissons est inférieure à 1/3 de leur hauteur dans la direction de leur hauteur (h) dans la direction axiale ZZ', et
- à l'étape b), la descente de l'embase est réalisée en contrôlant uniquement le remplissage desdits deuxièmes caissons.

2. Procédé selon la revendication 1, **caractérisé en ce qu'**à l'étape b), la descente de l'embase est réalisée en contrôlant uniquement le remplissage desdits deuxièmes caissons, à l'exclusion de tout autre ballastage contrôlé de ladite embase et/ou à l'exclusion de tout propulseur.

3. Procédé selon la revendication 1 ou 2, **caractérisé en ce qu'**à l'issue de l'étape b), une fois ladite embase posée au fond de la mer, le ou lesdits deuxièmes caissons restent partiellement seulement remplis d'eau de mer.

4. Procédé selon l'une des revendications 1 à 3, **caractérisé en ce que** la distance (d) entre lesdites surfaces internes (3a) et surfaces externes (3c) desdits deuxièmes caissons est de 1/5 à 1/3 de leur hauteur (h) dans la direction axiale ZZ'.

5. Procédé selon l'une des revendications 1 à 4, **caractérisé en ce que** :
- à l'étape a), lesdits deuxièmes caissons (3, 3-1, 3-2) sont fixés contre le premier bloc ou premier caisson (2) en ménageant un espace intercalaire (4) entre la face interne (3a) de chaque deuxième caisson et la surface externe latérale (2a) du premier bloc ou premier caisson (2), ledit espace intercalaire (4) étant rendu étanche par au moins un joint (5, 5-1, 5-2), et on réalise une dépression (6) dans cet espace intercalaire pour fixer ledit deuxième caisson contre ledit premier caisson, et
- après l'étape b), on désolidarise lesdits deuxièmes caissons, en remettant à la pression hydrostatique extérieure ledit espace intercalaire (4).

6. Procédé selon l'une des revendications 1 à 5, **caractérisé en ce que** ledit premier bloc ou premier caisson (2) comprend une surface latérale externe tronconique (2a) avec un radier (2c) constituant un rebord plat périphérique inférieur à sa base et une surface supérieure plate formant un rebord plat périphérique supérieur (2b) autour d'un mat et/ou cavité tubulaire (1a) de support de pylône (12a).

7. Procédé selon l'une des revendications 1 à 6, **caractérisé en ce que** l'on fixe deux deuxièmes caissons (3-1, 3-2) recouvrant chacun sensiblement la moitié de ladite surface externe latérale tronconique dudit premier bloc ou premier caisson, la face interne (3a) de chaque deuxième caisson (3-1, 3-2) coopérant en fixation étanche sur le premier bloc ou premier caisson (2) avec au moins un joint périphérique (5) comprenant :
- une partie semi-circulaire de joint supérieur (5-1) au niveau dudit rebord plat périphérique supérieur (2b), et
- une partie semi-circulaire de joint inférieur (5-2) au niveau dudit rebord plat périphérique inférieur (2d), et
- deux parties de joint latérales (5-3), disposées de préférence dans des plans radiaux par rapport à l'axe de révolution ZZ' du premier bloc ou premier caisson, chaque dite partie de joint latérale (5-3) s'étendant depuis une extrémité de la partie de joint semi-circulaire supérieure (5-1) jusqu'à une extrémité de la partie de joint semi-circulaire inférieure située du même côté par rapport à un plan de symétrie (P1) dudit deuxième caisson passant par l'axe de révolution ZZ' du premier bloc ou premier caisson.

8. Procédé selon l'une des revendications 1 à 7, **caractérisé en ce qu'**au moins une partie desdits deuxième caissons (3-1, 3-2) comprennent chacun une pluralité de compartiments internes (3i) cloisonnés par des cloisons séparatives (3k) et chaque compartiment étant autonome.

9. Procédé selon l'une des revendications 1 à 8, **caractérisé en ce que** lesdits deuxièmes caissons (3, 3-1, 3-2) et/ou des compartiments internes (3i) cloisonnés desdits deuxièmes caissons sont équipés de vannes (3b) ouvrant sur l'extérieur, de préférence une pluralité de vannes de différents diamètres selon lesdits deuxièmes caissons et/ou selon lesdits compartiments internes (3i).

10. Procédé selon l'une des revendications 1 à 9, **caractérisé en ce qu'**on réalise le déballastage desdits deuxièmes caissons et/ou de compartiments internes cloisonnés desdits deuxièmes caissons à l'aide de moyens de pompage sur un bateau d'assistance (9) reliés à des tuyaux souples (8).

11. Procédé selon l'une des revendications 1 à 10, **caractérisé en ce que** ledit premier bloc ou premier caisson (2) comprend un unique compartiment interne (2i).

12. Procédé selon l'une des revendications 1 à 11, **caractérisé en ce que** l'on remplit d'eau ledit premier bloc ou premier caisson (2) en cours d'immersion à l'étape b), ledit compartiment interne (2i) étant ouvert sur l'extérieur et se remplissant naturellement d'eau en cours d'immersion.

13. Structure sous-marine de support et d'ancrage comprenant une embase gravitaire (1) comprenant un premier bloc massif ou premier caisson creux (2) rempli au moins partiellement de moyens de lestage, de préférence de l'eau, reposant sur le fond marin (11) et assurant un ancrage de par son propre poids ; ledit premier bloc ou premier caisson gravitaire (2) comprenant une surface supérieur (2b) supportant un mat et/ou dispositif supérieur (1a) apte à recevoir la base du pylône (12a) d'une éolienne (12), une surface inférieure plane (2c) apte à reposer au fond de la mer et une surface externe latérale (2a), de préférence imperméable, utile dans un procédé selon l'une des revendications 1 à 12 **caractérisée en ce qu'**elle comprend une pluralité de dits deuxièmes caissons (3-1, 3-2) de même forme et mêmes dimensions, fixés audit premier bloc ou caisson, symétriquement répartis sur une surface externe latérale de forme tronconique (2a) du premier bloc ou premier caisson (2) par rapport à un plan de symétrie dudit premier bloc ou caisson passant par l'axe de révolution ZZ' du premier bloc ou premier caisson, les surfaces externes (3c) et surfaces internes (3a) desdits deuxièmes caissons définissant des surfaces de révolution de forme tronconique autour d'un même axe de révolution (ZZ') que ladite surface externe dudit premier bloc ou premier caisson (2),
- chaque dit deuxième caisson comprenant une surface interne (3a) épousant la forme de la partie de dite surface externe (2a, 2b, 2c) de premier bloc ou caisson (2) en vis à vis de laquelle il est appliqué, lesdits deuxièmes caissons (3-1, 3-2) étant disposés de manière à ce que l'ensemble desdits deuxièmes caissons recouvre la totalité de ladite surface externe latérale (2a), chaque dit deuxième caisson (3-1, 3-2) comprenant au moins une vanne (3b) ouvrant sur l'extérieur,
- la distance (d) entre lesdites surfaces internes (3a) et surfaces externes (3c) desdits deuxièmes caissons est inférieure à 1/3, de préférence de 1/5 à 1/3, de leur hauteur (h) dans la direction axiale ZZ'.

14. Structure sous-marine selon la revendication 13, **caractérisée en ce que** ledit premier bloc ou premier caisson et lesdits deuxièmes caissons sont tels que définis dans l'une des revendications 7 à 9 et 11.

## Patentansprüche

1. Verfahren zum Transportieren und Ablegen einer submarinen Stütz- und Verankerungskonstruktion für maritime Ausrüstung, vorzugsweise einer Windkraftanlage, auf dem Meeresboden, wobei die submarine Stütz- und Verankerungskonstruktion eine Schwerkraftbasis (1) umfasst, die einen ersten massiven Block oder einen ersten hohlen Behälter (2) umfasst, der mit Ballastmitteln gefüllt ist, auf dem Meeresboden (11) aufliegt und durch sein Eigengewicht eine Verankerung gewährleistet, wobei der erste Schwerkraftblock oder -behälter (2) eine obere Außenfläche (2b), die einen Mast und/oder eine obere Vorrichtung (1a) trägt, die in der Lage ist, die Basis der Säule (12a) einer Windkraftanlage (12) aufzunehmen, eine flache untere Fläche (2d), die in der Lage ist, auf dem Meeresboden zu liegen, und eine seitliche Außenfläche (2a), vorzugsweise undurchlässig, umfasst, wobei in dem Verfahren die folgenden Schritte ausgeführt werden:
a) Schleppen der mit Auftriebselementen ausgestatteten Basis (1), dann
b) Absenken der Basis auf den Meeresboden,
und wobei:
- vor Schritt a) eine Mehrzahl von zweiten hohlen Auftriebs- und Ballastbehälter (3-1, 3-2) an der Außenfläche (2a, 2b, 2c) des ersten Blocks oder ersten Schwerkraftbehälters (2) abnehmbar befestigt werden und
- in Schritt a) mindestens ein Teil der zweiten Behälter (3, 3-1, 3-2) geleert wird und
- in Schritt b) in die zweiten Behälter (3, 3-1, 3-2) Meerwasser gegeben wird, um die Basis (1) auf den Meeresboden (11) abzusenken, wobei vorzugsweise die zweiten Behälter (3, 3-1, 3-2) nur teilweise mit Meerwasser gefüllt bleiben, und
- nach Schritt b) die zweiten Behälter (3, 3-1, 3-2) entkoppelt und entleert werden, vorzugsweise allmählich, sodass sie durch Auftrieb wieder zur Oberfläche (10) aufsteigen, vorzugsweise allmählich,
**dadurch gekennzeichnet, dass**:
- eine Mehrzahl der zweiten Behälter (3-1, 3-2) mit der gleichen Form und den gleichen Abmessungen befestigt werden, wobei diese auf einer seitlichen Außenfläche mit kegelstumpfförmiger Form (2a) des ersten Blocks oder ersten Behälters (2) symmetrisch in Bezug auf eine Symmetrieebene des ersten Blocks oder Behälters, die durch die Drehachse ZZ' des ersten Blocks oder ersten Behälters verläuft, verteilt sind, wobei die seitlichen Außenflächen (3c) und die seitlichen Innenflächen (3a) der zweiten Behälter kegelstumpfförmige Rotationsflächen mit der gleichen Drehachse (ZZ') wie die seitliche Außenfläche des ersten Blocks oder Behälters (2) definieren,
- jeder zweite Behälter eine seitliche Innenfläche (3a) aufweist, die zu der Form des Abschnitts der seitlichen Außenfläche (2a, 2b, 2c) eines ersten Blocks oder Behälters (2) konform ist, gegenüber dem er angebracht ist, wobei die zweiten Behälter (3-1, 3-2) so angeordnet sind, dass alle zweiten Behälter die gesamte seitliche Außenfläche (2a) bedecken, wobei jeder zweite Behälter (3-1, 3-2) mindestens ein Ventil (3b) aufweist, das sich nach außen öffnet, und
- der Abstand (d) zwischen den Innenflächen (3a) und den Außenflächen (3c) der zweiten Behälter weniger als 1/3 ihrer Höhe in Richtung ihrer Höhe (h) in axialer Richtung ZZ' beträgt, und
- in Schritt b) das Absenken der Basis erfolgt, indem nur die Befüllung der zweiten Behälter gesteuert wird.

2. Verfahren gemäß Anspruch 1, **dadurch gekennzeichnet, dass** in Schritt b) das Absenken der Basis erfolgt, indem nur die Befüllung der zweiten Behälter gesteuert wird, wobei jede anderen gesteuerte Ballastierung der Basis und/oder jegliche Treibmittel ausgeschlossen werden.

3. Verfahren gemäß Anspruch 1 oder 2, **dadurch gekennzeichnet, dass** am Ende von Schritt b), nachdem die Basis auf den Meeresboden gelegt worden ist, der oder die zweite(n) Behälter nur teilweise mit Meerwasser gefüllt bleiben.

4. Verfahren gemäß einem der Ansprüche 1 bis 3, **dadurch gekennzeichnet, dass** der Abstand (d) zwischen den Innenflächen (3a) und den Außenflächen (3c) der zweiten Behälter 1/5 bis 1/3 ihrer Höhe (h) in axialer Richtung ZZ' beträgt.

5. Verfahren gemäß einem der Ansprüche 1 bis 4, **dadurch gekennzeichnet, dass**:
- in Schritt a) die zweiten Behälter (3, 3-1, 3-2) an dem ersten Block oder ersten Behälter (2) befestigt werden, während ein Zwischenraum (4) zwischen der Innenfläche (3a) jedes zweiten Behälters und der seitlichen Außenfläche (2a) des ersten Blocks oder ersten Behälters (2) vorgesehen ist, wobei der Zwischenraum (4) durch mindestens eine Dichtung (5, 5-1, 5-2) abgedichtet ist und ein Unterdruck (6) in dem Zwischenraum hergestellt wird, um den zweiten Behälter an dem ersten Behälter zu befestigen, und
- nach Schritt b) die zweiten Behälter entkoppelt werden, indem der Zwischenraum (4) wieder auf den äußeren hydrostatischen Druck gebracht wird.

6. Verfahren gemäß einem der Ansprüche 1 bis 5, **dadurch gekennzeichnet, dass** der erste Block oder erste Behälter (2) eine kegelstumpfförmige seitliche Außenfläche (2a) mit einer Bodenplatte (2c) umfasst, die an ihrer Basis einen flachen unteren Umfangsrand und eine flache obere Fläche bildet, die einen flachen oberen Umfangsrand (2b) um einen Mast und/oder einen rohrförmigen Hohlraum (1a) zum Stützen der Säule (12a) bilden.

7. Verfahren gemäß einem der Ansprüche 1 bis 6, **dadurch gekennzeichnet, dass** zwei zweite Behälter (3-1, 3-2) befestigt werden, die jeweils im Wesentlichen die Hälfte der kegelstumpfförmigen seitlichen Außenfläche des ersten Blocks oder ersten Behälters bedecken, wobei die Innenfläche (3a) jedes zweiten Behälters (3-1, 3-2) bei einer dichten Befestigung an dem ersten Block oder ersten Behälter (2) mit mindestens einer Umfangsdichtung (5) zusammenwirkt, umfassend:
- einen halbkreisförmigen oberen Dichtungsabschnitt (5-1) im Bereich des flachen oberen Umfangsrandes (2b) und
- einen halbkreisförmigen unteren Dichtungsabschnitt (5-2) im Bereich des flachen unteren Umfangsrandes (2d) und
- zwei seitliche Dichtungsabschnitte (5-3), die vorzugsweise in radialen Ebenen in Bezug auf die Drehachse ZZ' des ersten Blocks oder ersten Behälters angeordnet sind, wobei sich jeder der seitlichen Dichtungsabschnitte (5-3) von einem Ende des oberen halbkreisförmigen Dichtungsabschnitts (5-1) zu einem Ende des unteren halbkreisförmigen Dichtungsabschnitts erstreckt, der auf der gleichen Seite in Bezug auf eine Symmetrieebene (P1) des zweiten Behälters liegt, die durch die Drehachse ZZ' des ersten Blocks oder Behälters verläuft.

8. Verfahren gemäß einem der Ansprüche 1 bis 7, **dadurch gekennzeichnet, dass** mindestens ein Teil der zweiten Behälter (3-1, 3-2) jeweils eine Mehrzahl von Innenkammern (3i) umfasst, die durch Trennwände (3k) unterteilt sind und wobei jede Kammer autonom ist.

9. Verfahren gemäß einem der Ansprüche 1 bis 8, **dadurch gekennzeichnet, dass** die zweiten Behälter (3, 3-1, 3-2) und/oder die abgetrennten Innenkammern (3i) der zweiten Behälter mit Ventilen (3b) ausgestattet sind, die sich nach außen öffnen, vorzugsweise eine Mehrzahl von Ventilen mit unterschiedlichem Durchmesser entsprechend den zweiten Behältern und/oder entsprechend den Innenkammern (3i).

10. Verfahren gemäß einem der Ansprüche 1 bis 9, **dadurch gekennzeichnet, dass** die Entfernung des Ballasts aus den zweiten Behältern und/oder den abgetrennten Innenkammern der zweiten Behälter mit Hilfe von Pumpmitteln auf einem Assistenzschiff (9) durchgeführt wird, die mit flexiblen Schläuchen (8) verbunden sind.

11. Verfahren gemäß einem der Ansprüche 1 bis 10, **dadurch gekennzeichnet, dass** der erste Block oder erste Behälter (2) eine einzige Innenkammer (2i) umfasst.

12. Verfahren gemäß einem der Ansprüche 1 bis 11, **dadurch gekennzeichnet, dass** der erste Block oder der erste Behälter (2) beim Eintauchen in Schritt b) mit Wasser gefüllt wird, wobei die Innenkammer (2i) außen offen ist und sich natürlich beim Eintauchen mit Wasser füllt.

13. Submarine Stütz- und Verankerungskonstruktion, umfassend eine Schwerkraftbasis (1), die einen ersten massiven Block oder einen ersten hohlen Behälter (2) umfasst, der zumindest teilweise mit Ballastmitteln, vorzugsweise Wasser, gefüllt ist, auf dem Meeresboden (11) aufliegt und durch sein Eigengewicht eine Verankerung gewährleistet, wobei der erste Block oder erste Schwerkraftbehälter (2) eine obere Fläche (2b), die einen Mast und/oder eine obere Vorrichtung (1a) trägt, die in der Lage ist, die Basis der Säule (12a) einer Windkraftanlage (12) aufzunehmen, eine flache untere Fläche (2c), die in der Lage ist, auf dem Meeresboden zu liegen, und eine seitliche Außenfläche (2a), vorzugsweise undurchlässig, umfasst, verwendbar in einem Verfahren gemäß einem der Ansprüche 1 bis 12, **dadurch gekennzeichnet, dass** sie eine Mehrzahl der zweiten Behälter (3-1, 3-2) mit der gleichen Form und den gleichen Abmessungen aufweist, die an dem ersten Block oder Behälter befestigt werden und auf einer seitlichen Außenfläche mit kegelstumpfförmiger Form (2a) des ersten Blocks oder ersten Behälters (2) symmetrisch in Bezug auf eine Symmetrieebene des ersten Blocks oder Behälters, die durch die Drehachse ZZ' des ersten Blocks oder ersten Behälters verläuft, verteilt sind, wobei die Außenflächen (3c) und die Innenflächen (3a) der zweiten Behälter kegelstumpfförmige Rotationsflächen mit der gleichen Drehachse (ZZ') wie die Außenfläche des ersten Blocks oder ersten Behälters (2) definieren,
- jeder zweite Behälter eine Innenfläche (3a) aufweist, die zu der Form des Abschnitts der Außenfläche (2a, 2b, 2c) eines ersten Blocks oder Behälters (2) konform ist, gegenüber dem er angebracht ist, wobei die zweiten Behälter (3-1, 3-2) so angeordnet sind, dass alle zweiten Behälter die gesamte seitliche Außenfläche (2a) bedecken, wobei jeder zweite Behälter (3-1, 3-2) mindestens ein Ventil (3b) aufweist, das sich nach außen öffnet,
- der Abstand (d) zwischen den Innenflächen (3a) und den Außenflächen (3c) der zweiten Behälter weniger als 1/3, vorzugsweise zwischen 1/5 und 1/3, ihrer Höhe (h) in axialer Richtung ZZ' beträgt.

14. Submarine Konstruktion gemäß Anspruch 13, **dadurch gekennzeichnet, dass** der erste Block oder erste Behälter und die zweiten Behälter derart sind, wie in einem der Ansprüche 7 bis 9 und 11 definiert.

## Claims

1. A method of transporting an undersea structure for supporting and anchoring offshore equipment, preferably a wind turbine, and for depositing it on the sea bottom, said undersea support and anchoring structure comprising a gravity base (1) comprising a first solid block or a first hollow caisson (2) filled with ballast means and that rests on the sea bottom (11) and provides anchoring by virtue of its weight; said gravity first block or caisson (2) having a top outer surface (2b) supporting a column and/or a top device (1a) suitable for receiving the base of the pylon (12a) of a wind turbine (12), a plane bottom surface (2d) suitable for resting on the sea bottom, and a preferably leakproof outside surface (2a), in which method the following steps are performed:
a) stowing said base (1) while fitted with buoyancy elements; and then
b) lowering said base to the sea bottom;
and wherein:
- before step a), a plurality of hollow buoyancy and ballasting second caissons (3-1, 3-2) are releasably fastened on the outside surface (2a, 2b, 2c) of said gravity first block or first caisson (2); and
- in step a), at least some of said second caissons (3, 3-1, 3-2) are emptied at least in part; and
- in step b), sea water is added into said second caissons (3, 3-1, 3-2) in order to lower said base (1) down to the sea bottom (11), with said second caissons (3, 3-1, 3-2) preferably remaining filled only in part with sea water; and
- after step b), said second caissons (3, 3-1, 3-2) are separated and emptied, preferably progressively, so as to raise them to the surface (10) by buoyancy, preferably progressively;
the method being **characterized in that**:
- a plurality of said second caissons (3-1, 3-2) having the same shape and the same dimensions are fastened on an outside surface (2a) of frustoconical shape of the first block or first caisson (2) in a symmetrical distribution relative to a plane of symmetry of said first block or caisson and containing the axis of revolution (ZZ') of the first block or first caisson, the outside surfaces (3c) and the inside surfaces (3a) of said second caissons defining surfaces of revolution of frustoconical shape having the same axis of revolution (ZZ') as said outside surface of said first block or first caisson (2);
- each said second caisson having an inside surface (3a) matching the shape of the facing portion of said outside surface (2a, 2b, 2c) of the first block or caisson (2) against which it is applied, said second caissons (3-1, 3-2) being arranged in such a manner that together said second caissons cover all of said outside surface (2a), each said second caisson (3-1, 3-2) having at least one valve (3b) opening to the outside; and
- the distance (d) between said inside and outside surfaces (3a, 3b) of said second caissons is less than 1/3 of their height in the direction of their height (h) in the axial direction ZZ'; and
- in step b), the base is lowered by controlling solely the filling of said second caissons.

2. A method according to claim 1, **characterized in that** in step b), the base is lowered by controlling solely the filling of said second caissons, to the exclusion of any other controlled ballasting of said base and/or to the exclusion of any thruster.

3. A method according to claim 1 or claim 2, **characterized in that**, at the end of step b), once said base has been placed on the sea bottom, said second caisson(s) remain(s) only partially filled with sea water.

4. A method according to any one of claims 1 to 3, **characterized in that** the distance (d) between said inside and outside surfaces (3a, 3b) of said second caissons lies in the range 1/5 to 1/3 of their height (h) in the axial direction ZZ'.

5. A method according to any one of claims 1 to 4, **characterized in that**:
- in step a), said second caissons (3, 3-1, 3-2) are fastened against the first block or first caisson (2) while leaving an in-between space (4) between the inside face (3a) of each second caisson and the outside surface (2a) of the first block or first caisson (2), said in-between space (4) being sealed by at least one gasket (5, 5-1, 5-2), and suction (6) is established in said in-between space in order to fasten said second caisson against said first caisson; and
- after step b), said second caissons are separated by returning said in-between space (4) to the external hydrostatic pressure.

6. A method according to any one of claims 1 to 5, **characterized in that** said first block or first caisson (2) has a frustoconical outside surface (2a) with a raft (2c) constituting a bottom peripheral flat rim at its base and a flat top surface forming a top peripheral flat rim (2b) around a column and/or a tubular cavity (1a) for supporting a pylon (12a).

7. A method according to any one of claims 1 to 6, **characterized in that** two second caissons (3-1, 3-2) are fastened, each covering substantially half of said frustoconical outside surface of said first block or first caisson, the inside face (3a) of each second caisson (3-1, 3-2) co-operating in sealed fastening against the first block or first caisson (2) with at least one peripheral gasket (5) comprising:
- a semi-circular top gasket portion (5-1) at said top peripheral flat rim (2b); and
- a semi-circular bottom gasket portion (5-2) at said bottom peripheral flat rim (2b); and
- two side gasket portions (5-3) preferably arranged in planes radial relative to the axis of revolution ZZ' of the first block or first caisson, each said side gasket portion (5-3) extending from one end at the top semi-circular gasket portion (5-1) to an end at the bottom semi-circular gasket portion situated on the same side relative to a plane of symmetry (P1) of said second caisson containing the axis of revolution ZZ' of the first block or first caisson.

8. A method according to any one of claims 1 to 7, **characterized in that** at least some of said second caissons (3-1, 3-2) comprise a respective plurality of internal compartments (3i) partitioned by separating partitions (3k), with each compartment being independent.

9. A method according to any one of claims 1 to 8, **characterized in that** said second caissons (3, 3-1, 3-2) and/or the partitioned internal compartments (3i) of said second caissons are provided with valves (3b) opening to the outside, preferably with a plurality of valves of different diameters for said second caissons and/or for said second internal compartments (3i).

10. A method according to any one of claims 1 to 9, **characterized in that** said second caissons and/or partitioned internal compartments of said second caissons are deballasted using pumping means on a service vessel (9) connected to flexible pipes (8).

11. A method according to any one of claims 1 to 10, **characterized in that** said first block or first caisson (2) has a single internal compartment (2i).

12. A method according to any one of claims 1 to 11, **characterized in that** said first block or first caisson (2) is filled with water during immersion in step b), said internal compartment (2i) being open to the outside and filling naturally with water during immersion.

13. An undersea support and anchoring structure comprising a gravity base (1) comprising a first solid block or a first hollow caisson (2) filled at least in part with ballast means, preferably water, resting on the sea bottom (11), and providing anchoring by means of its weight; said gravity first block or first caisson (2) having a top surface (2b) supporting a column and/or a top device (1a) suitable for receiving the base of the pylon (12a) of a wind turbine (12), a plane bottom surface (2c) suitable for resting on the sea bottom, and a preferably leakproof outside surface (2a), the structure being suitable for use in a method according to any one of claims 1 to 12 and being **characterized in that** it comprises a plurality of said second caissons (3-1, 3-2) having the same shape and the same dimensions that are fastened to said first block or caisson on an outside surface (2a) of frustoconical shape of the first block or first caisson (2) in a symmetrical distribution relative to a plane of symmetry of said first block or caisson containing the axis of revolution ZZ' of the first block or first caisson, the outside surfaces (3c) and the inside surfaces (3a) of said second caissons defining surfaces of revolution of frustoconical shape about the same axis of revolution (ZZ') as said outside surface of said first block or first caisson (2);
- each said second caisson having an inside surface (3a) matching the shape of the facing portion of said outside surface (2a, 2b, 2c) of the first block or caisson (2) against which it is applied, said second caissons (3-1, 3-2) being arranged in such a manner that said second caissons together cover all of said outside surface (2a), each said second caisson (3-1, 3-2) including at least one valve (3b) opening to the outside;
- the distance (d) between said inside surfaces (3a) and outside surfaces (3c) of said second caissons is less than 1/3, preferably lying in the range 1/5 to 1/3, of their height (h) in the axial direction ZZ'.

14. An undersea structure according to claim 13, **characterized in that** said first block or first caisson and said second caissons are such as defined in any one of claims 7 to 9 and 11.
